# EUROPÄISCHE PATENTSCHRIFT

(11) **EP 3 466 498 B1**
(45) Veröffentlichungstag und Bekanntmachung des Hinweises auf die Patenterteilung: **04.12.2019**
(21) Anmeldenummer: 17195429.0
(22) Anmeldetag: 09.10.2017
(51) Int. Cl.: A63B 29/02, A63B 71/06

(54) **LAWINEN-VERSCHÜTTETEN-SUCHGERÄT UND VERFAHREN ZUM BETREIBEN EINES LAWINEN-VERSCHÜTTETEN-SUCHGERÄTS**
SEARCH DEVICE FOR AVALANCHE VICTIMS AND METHOD FOR OPERATING A SEARCH DEVICE FOR AVALANCHE VICTIMS
APPAREIL DE RECHERCHE DE PERSONNES ENSEVELIES PAR AVALANCHE ET PROCÉDÉ DE FONCTIONNEMENT D'UN APPAREIL DE RECHERCHE DE PERSONNES ENSEVELIES PAR AVALANCHE

(43) Veröffentlichungstag der Anmeldung: 10.04.2019
(73) Patentinhaber: Ortovox Sportartikel GmbH, 82024 Taufkirchen (DE)
(72) Erfinder: Kotlaba, Dieter, 82515 Wolfratshausen (DE); Monden, Philipp, 81924 München (DE); Matzner, Rolf, 80639 München (DE)
(74) Vertreter: Hofstetter, Schurack & Partner

(56) Entgegenhaltungen:
- WO-A1-2006/015721
- DE-U1- 29 922 217
- US-A1- 2006 148 423

## Beschreibung

Die Erfindung betrifft ein Lawinen-Verschütteten-Suchgerät mit einer Sendeeinheit zum Senden wenigstens eines Sendesignals, einer Empfangseinheit zum Empfangen wenigstens eines Sendesignals von wenigstens einem weiteren Lawinen-Verschütteten-Suchgerät, und mit einer Steuerungseinrichtung zum Ansteuern wenigstens eines Lautsprechers. Des Weiteren betrifft die Erfindung ein Verfahren zum Betreiben eines solchen Lawinen-Verschütteten-Suchgeräts.

Die WO 2006/015721 A1 beschreibt ein Lawinen-Verschütteten-Suchgerät mit einer Ausgabeeinrichtung, welche für menschliche Sinne wahrnehmbare Reize erzeugt, etwa akustische Reize in Form von Summern oder Lautsprechern. Bei dem Lawinen-Verschütteten-Suchgerät ist eine Sprachausgabeeinrichtung vorgesehen, welche einen Benutzer sprachgesteuert zu einer aufzufindenden Person leitet.

Die US 2006/0148423 A1 beschreibt ein Lawinen-Verschütteten-Suchgerät mit einer Anzeige, auf welcher dann, wenn sich das Lawinen-Verschütteten-Suchgerät in einem Suchmodus befindet, Richtungspfeile anzeigen, in welche Richtung ein Suchender sich fortbewegen sollte, um ein sendendes Lawinen-Verschütteten-Suchgerät aufzufinden. Des Weiteren wird auf der Anzeige der Abstand von dem sendenden Suchgerät dargestellt. Darüber hinaus weist das Lawinen-Verschütteten-Suchgerät einen Lautsprecher auf, welcher im Suchmodus ein Audiosignal ausgibt. Dieses Audiosignal wird lauter, wenn sich das suchende Lawinen-Verschütteten-Suchgerät dem sendenden Lawinen-Verschütteten-Suchgerät annähert.

Als nachteilig ist hierbei der Umstand anzusehen, dass sich trotz der auf der Anzeige dargestellten Hinweise für die Suche und des Tonsignals die Suche nach dem sendenden Lawinen-Verschütteten-Suchgerät schwierig gestaltet. Insbesondere in der Stresssituation, in welcher sich der Suchende befindet, welcher nach dem verschütteten Träger des sendenden Suchgeräts sucht, bedeutet die Beachtung der auf der Anzeige dargestellten Hinweise und des Audiosignals eine beträchtliche Herausforderung.

Aufgabe der vorliegenden Erfindung ist es daher, ein Lawinen-Verschütteten-Suchgerät und ein Verfahren der eingangs genannten Art zu schaffen, welches die Suche nach einem sendenden Lawinen-Verschütteten-Suchgerät vereinfacht.

Diese Aufgabe wird durch ein Lawinen-Verschütteten-Suchgerät mit den Merkmalen des Patentanspruchs 1 und durch ein Verfahren mit den Merkmalen des Patentanspruchs 13 gelöst. Vorteilhafte Ausgestaltungen mit zweckmäßigen Weiterbildungen der Erfindung sind in den abhängigen Patentansprüchen angegeben.

Das erfindungsgemäße Lawinen-Verschütteten-Suchgerät weist eine Sendeeinheit zum Senden wenigstens eines Sendesignals und eine Empfangseinheit zum Empfangen wenigstens eines von wenigstens einem weiteren Lawinen-Verschütteten-Suchgerät gesendeten Sendesignals auf. Das Lawinen-Verschütteten-Suchgerät weist eine Steuerungseinrichtung zum Ansteuern wenigstens eines Lautsprechers auf. Die Steuerungseinrichtung ist dazu ausgebildet, in Abhängigkeit von wenigstens einem Ereignis den wenigstens einen Lautsprecher zum Ausgeben zumindest einer Sprachnachricht anzusteuern. Hierbei steht das wenigstens eine Ereignis mit einer Suche nach dem wenigstens einen weiteren Lawinen-Verschütteten-Suchgerät in Zusammenhang. Es lässt sich somit die Suche nach dem weiteren beziehungsweise sendenden Lawinen-Verschütteten-Suchgerät durch das Ausgeben der wenigstens einen Sprachnachricht unterstützen. Dies vereinfacht die Suche nach dem sendenden Lawinen-Verschütteten-Suchgerät.

Insbesondere können nämlich einem Nutzer des sich in einem Suchmodus befindenden Lawinen-Verschütteten-Suchgeräts in Form der zumindest einen Sprachnachricht Hinweise gegeben werden, seine Suchstrategie beziehungsweise die Art der Suche zu verändern beziehungsweise an die Suchsituation anzupassen. Dadurch kann die Suche nach dem sendenden beziehungsweise weiteren Lawinen-Verschütteten-Suchgerät besonders rasch und zuverlässig erfolgen. Die Steuerungseinrichtung ist also dazu ausgebildet, das wenigstens eine Ereignis zu berücksichtigen, welches mit der Suche nach dem wenigstens einen weiteren beziehungsweise sendenden Lawinen-Verschütteten-Suchgerät in Zusammenhang steht. Dadurch kann die Suche nach dem wenigstens einen weiteren Lawinen-Verschütteten-Suchgerät durch das Ausgeben der zumindest einen Sprachnachricht besonders effizient unterstützt werden.

Das erfindungsgemäße Lawinen-Verschütteten-Suchgerät weist den wenigstens einen Lautsprecher auf. Dann lässt sich das Ansteuern des Lautsprechers mittels der Steuerungseinrichtung des Lawinen-Verschütteten-Suchgerät sehr einfach und funktionssicher realisieren.

Der wenigstens eine Lautsprecher ist dazu ausgebildet, wenigstens ein Tonsignal auszugeben, welches mit der Suche nach dem wenigstens einen weiteren Lawinen-Verschütteten-Suchgerät in Zusammenhang steht. Beispielsweise können sich in der Frequenz und/oder in der Wiederholungsrate und/oder in der Lautstärke verändernde Pieptöne als Tonsignale von dem wenigstens einen Lautsprecher ausgegeben werden. So können etwa die Frequenz des einzelnen Pieptons sowie die Wiederholungsrate der Pieptöne und deren Lautstärke ansteigen, je weiter sich das suchende Suchgerät dem sendenden Suchgerät annähert. Auf diese Weise wird die Suche nach dem sendenden beziehungsweise verschütteten Suchgerät weiter unterstützt.

Die Steuerungseinrichtung ist dazu ausgebildet, den wenigstens einen Lautsprecher derart anzusteuern, dass das wenigstens eine Tonsignal während des Ausgebens der zumindest einen Sprachnachricht unterdrückt wird oder mit einer verringerten Lautstärke ausgegeben wird. Dadurch stören keine Tonsignale wie beispielsweise Pieptöne die Verständlichkeit der Sprachnachrichten. Dies erleichtert wiederum die mittels des wenigstens einen Tonsignals unterstützte Suche nach dem sendenden Suchgerät.

Im Folgenden werden der Einfachheit halber das suchende beziehungsweise das wenigstens eine Sendesignal empfangende Lawinen-Verschütteten-Suchgerät auch als das "suchende Suchgerät" oder als das "empfangende Suchgerät" bezeichnet, und das wenigstens eine weitere Lawinen-Verschütteten-Suchgerät, welches das wenigstens eine Sendesignal ausgibt, auch als das "weitere Suchgerät" oder als das "sendende Suchgerät" oder als das "verschüttete Suchgerät".

Das Berücksichtigen des wenigstens einen Ereignisses durch die Steuerungseinrichtung ermöglicht es, die Suche nach dem sendenden Suchgerät in unterschiedliche Zustände beziehungsweise Suchzustände zu unterteilen beziehungsweise zu klassifizieren. Als Auslöser für eine Sprachausgabe beziehungsweise ein Ausgeben der Sprachnachricht kann dann insbesondere ein Ereignis in Form eines Zustandswechsel genutzt werden.

Insbesondere kann vorgesehen sein, dass die Steuerungseinrichtung dazu ausgebildet ist, dann den wenigstens einen Lautsprecher zum Ausgeben der zumindest einen Sprachnachricht anzusteuern, wenn die Empfangseinheit und/oder die Steuerungseinrichtung eine Veränderung wenigstens eines mit der Suche in Zusammenhang stehenden Parameters erfasst. So kann besonders gut auf eine Veränderung der Suchsituation reagiert werden, indem die Sprachnachricht ausgegeben beziehungsweise dem Nutzer des empfangenden Suchgeräts eine entsprechende Sprachausgabe übermittelt wird.

Vorzugsweise ist die Steuerungseinrichtung dazu ausgebildet, dann den wenigstens einen Lautsprecher zum Ausgeben der zumindest einen Sprachnachricht anzusteuern, wenn die Empfangseinheit eine Veränderung einer empfangenen Stärke und/oder einer empfangenen Qualität des Sendesignals des weiteren Lawinen-Verschütteten-Suchgerät erfasst. Dadurch lässt sich die Suche gut auf die gerade vorliegenden Bedingungen abstimmen. Beispielsweise kann der Nutzer des empfangenden beziehungsweise suchenden Suchgeräts zunächst dazu aufgefordert werden, im Rahmen einer Signalsuche etwa einen Lawinenkegel mit einer bestimmten Suchstreifenbreite abzusuchen, solange die empfangene Stärke und/oder die Qualität des Sendesignals noch nicht ausreichend sind, um das sendende Suchgerät zu lokalisieren. Sobald jedoch das empfangene Sendesignal ausreichend ist, um eine stabile Zielführung zu ermöglichen, kann eine entsprechende Sprachnachricht ausgegeben werden.

Dann kann dem Nutzer des empfangenden Suchgeräts mitgeteilt werden, dass ein Sender erkannt wurde und dass der Nutzer des empfangenden Suchgeräts beispielsweise geradeaus laufen solle, nach rechts laufen solle oder nach links laufen solle. Entsprechende Sprachnachrichten können also beispielsweise lauten: "Sender erkannt", "Laufe geradeaus", "Laufe nach rechts" oder "Laufe nach links".

Darüber hinaus kann es vorkommen, dass sich die Sendesignale von wenigstens zwei sendenden beziehungsweise verschütteten Suchgeräten überlagern und hierbei zumindest teilweise auslöschen. Auch dies kann sich in einer Veränderung einer Stärke und/oder einer Qualität des empfangenen Sendesignals bemerkbar machen. Daraufhin kann dem Nutzer des suchenden beziehungsweise empfangenden Suchgeräts eine Sprachnachricht ausgegeben werden, dass eine solche Signalüberlagerung vorliegt und der Nutzer des empfangenden Suchgeräts weiterlaufen solle. Eine entsprechende Sprachnachricht beziehungsweise Sprachausgabe oder ein Kommando kann lauten: "Signalüberlagerung. Laufe weiter".

Es kann auch vorkommen, dass externe Störquellen wie elektronische, magnetische oder metallische Gegenstände die Qualität des empfangenen Sendesignals beeinträchtigen. Solche Störquellen wie etwa Smartphones, Kameras, Funkgeräte, GPS-Geräte, Stromleitungen, Funkmasten und dergleichen können dazu führen, dass die Empfindlichkeit des suchenden Suchgeräts mittels der Steuerungseinrichtung gezielt verringert wird. Dann kann beispielsweise der Suchende mittels der Sprachnachricht dazu aufgefordert werden, den Lawinenkegel mit einer verringerten Suchstreifenbreite abzusuchen.

Beispielsweise kann der Nutzer des suchenden Suchgeräts dann, wenn keine beziehungsweise kaum externe Störquellen vorliegen, den Lawinenkegel in Suchstreifen absuchen, welche eine Breite von etwa 50 Metern bis etwa 60 Metern aufweisen. Bei der reduzierten Reichweite des empfangenden beziehungsweise suchenden Suchgeräts kann der Nutzer demgegenüber per Sprachnachricht dazu angewiesen werden, den Lawinenkegel mit einer Suchstreifenbreite von etwa 25 Metern bis etwa 30 Metern abzusuchen.

Von Vorteil ist es weiterhin, wenn die Steuerungseinrichtung dazu ausgebildet ist, dann den wenigstens einen Lautsprecher zum Ausgeben der zumindest einen Sprachnachricht anzusteuern, wenn die Empfangseinheit eine Veränderung einer Richtung erfasst, aus welcher das Sendesignal des weiteren Lawinen-Verschütteten-Suchgeräts kommt. So kann der Suchende über die Sprachnachricht beispielsweise dazu aufgefordert werden, nun nicht mehr geradeaus zu laufen, sondern nach rechts zu laufen oder nach links zu laufen. Auch dadurch lässt sich die Suche nach dem sendenden beziehungsweise verschütteten Suchgerät vereinfachen beziehungsweise verbessern.

Das Lawinen-Verschütteten-Suchgerät kann insbesondere dazu ausgebildet sein, Sendesignale auf unterschiedlichen Frequenzen zu senden, wobei dann die Empfangseinheit dazu ausgebildet ist, die auf den unterschiedlichen Frequenzen gesendeten Sendesignale zu empfangen. So kann eine der Frequenzen dazu genutzt werden, weitere mit der Suche nach dem verschütteten beziehungsweise sendenden Suchgerät zusammenhängende Daten zu übermitteln. Beispielsweise können auf der weiteren Frequenz Lagedaten des sendenden Suchgeräts und/oder eine Orientierung wenigstens einer Sendeantenne des sendenden Suchgeräts übermittelt werden. So kann auf verbesserte Weise eine direkte Suche auf dem kürzesten Weg zu dem Verschütteten durchgeführt werden. Wenn also die Qualität des wenigstens einen Sendesignals eine Verknüpfung der auf den unterschiedlichen Frequenzen übermittelten Daten miteinander erlaubt, kann eine solche, direkte Suche oder Direktsuche eingeleitet werden. Auch ein Übergang von einer herkömmlichen Grobsuche, bei welcher grob und rasch in die Richtung zu laufen ist, aus welcher das Sendesignal kommt, in eine direkte Grobsuche beziehungsweise Direktsuche kann dem Nutzer des empfangenden Suchgeräts in Form der zumindest einen Sprachnachricht kommuniziert werden, beispielsweise durch eine Sprachnachricht wie etwa "Direkte Suche aktiv".

Vorzugsweise ist die Steuerungseinrichtung dazu ausgebildet, durch Auswerten des von der Empfangseinheit empfangenen Sendesignals einen Abstand von dem weiteren Lawinen-Verschütteten-Suchgerät abzuschätzen, und den wenigstens einen Lautsprecher dann zum Ausgeben der zumindest einen Sprachnachricht anzusteuern, wenn der Abstand geringer ist als ein vorbestimmter Schwellenwert. So kann dem Nutzer des empfangenden Suchgeräts beispielsweise mitgeteilt werden, dass er nun von einer Grobsuche zu einer Feinsuche übergehen solle.

Beispielsweise kann dem Nutzer die Sprachnachricht ausgegeben werden, dass er nun das empfangende Suchgerät nahe an die Schneeoberfläche des Lawinenkegels halten solle. Eine solche Sprachnachricht beziehungsweise ein solcher Befehl kann beispielsweise lauten: "Gehe runter an die Schneeoberfläche".

Insbesondere bei nochmals geringerem Abstand von dem weiteren beziehungsweise sendenden Suchgerät kann dem Nutzer des empfangenden Suchgeräts eine Sprachnachricht ausgegeben werden, dass nun kreuzförmig und mit nahe an die Schneeoberfläche gehaltenem Suchgerät der Bereich abgesucht werden solle, in welchem sich das sendende Suchgerät befindet. Beispielsweise kann eine solche Sprachnachricht beziehungsweise ein solches Kommando lauten: "Suche kreuzförmig den kleinsten Wert".

Bei einer solchen Feinsuche wird das empfangende Suchgerät nacheinander entlang zweier sich rechtwinklig kreuzender Linien bewegt, bis in Richtung der jeweiligen Linie ein geringster Entfernungswert oder Abstandswert auf einer Anzeigeeinheit, insbesondere einer Anzeigeeinheit des Suchgeräts, angezeigt wird. Die Stelle, an welcher sich die Linien kreuzen, kann dann mit einem Gegenstand markiert werden. An dieser Stelle kann dann der Verschüttete freigelegt werden.

Insbesondere kann beim Unterschreiten eines Abstands von etwa 6 Metern der Nutzer des suchenden Suchgeräts dazu aufgefordert werden, das Suchgerät der Schneeoberfläche anzunähern und beim Unterschreiten eines Abstands von etwa 3 Metern die kreuzförmige Suche durchzuführen. Durch ein derartiges Erfassen einer Veränderung des Abstands als dem wenigstens einen Ereignis und das Ausgeben der zumindest einen Sprachnachricht in Abhängigkeit davon kann die Suche sehr zielgerichtet und rasch durchgeführt werden.

Des Weiteren kann die Steuerungseinrichtung dazu ausgebildet sein, durch Auswerten des von der Empfangseinheit empfangenen Sendesignals einen Abstand von dem weiteren Lawinen-Verschütteten-Suchgerät abzuschätzen und den wenigstens einen Lautsprecher dann zum Ausgeben der zumindest einen Sprachnachricht anzusteuern, wenn eine Zunahme des Abstands größer ist als ein vorbestimmter Schwellenwert. So kann insbesondere während der Feinsuche der Nutzer des suchenden Suchgeräts darauf hingewiesen werden, dass er dem sendenden Suchgerät bereits näher war. Eine Sprachnachricht wie beispielsweise "Du warst bereits näher" kann etwa dann ausgegeben werden, wenn der während der Feinsuche angegebene Wert, insbesondere auf der Anzeigeeinrichtung angezeigte Wert, des Abstands um einen vorbestimmten Schwellenwert von beispielsweise etwa 0,3 Metern bis etwa 1,0 Metern, insbesondere von etwa 0,5 Metern, größer wird als der während der Feinsuche bereits ermittelte kleinste Wert des Abstands. Dies führt zu einer sehr präzisen Suche.

Als weiter vorteilhaft hat es sich gezeigt, wenn die Steuerungseinrichtung dazu ausgebildet ist, durch Auswerten des von der Empfangseinheit empfangenen Sendesignals eine Geschwindigkeit abzuschätzen, mit welcher sich ein Abstand von dem weiteren Lawinen-Verschütteten-Suchgerät verändert, insbesondere verringert, und den wenigstens einen Lautsprecher dann zum Ausgeben der zumindest einen Sprachnachricht anzusteuern, wenn die Geschwindigkeit größer ist als ein vorbestimmter erster Schwellenwert. So kann der Nutzer des suchenden Suchgeräts beispielsweise aufgefordert werden, langsamer zu gehen. Dies ist insbesondere vor dem Übergang von der Grobsuche zur Feinsuche vorteilhaft, also beispielsweise in einem Wertebereich des Abstands von etwa 11 Metern bis etwa 8 Metern. Die entsprechende Sprachnachricht, welche etwa bei einer Suchgeschwindigkeit von mehr als 1 Meter pro Sekunde ausgegeben werden kann, kann beispielsweise lauten: "Gehe langsamer". Dies ist einer effizienten Suche nach dem sendenden Suchgerät zuträglich.

Vorzugsweise ist die Steuerungseinrichtung des Weiteren dazu ausgebildet, durch Auswerten des von der Empfangseinheit empfangenen Sendesignals eine Geschwindigkeit abzuschätzen, mit welcher sich ein Abstand von dem weiteren Lawinen-Verschütteten-Suchgerät verändert, insbesondere verringert, und den wenigstens einen Lautsprecher dann zum Ausgeben der zumindest einen Sprachnachricht anzusteuern, wenn die Geschwindigkeit kleiner ist als ein vorbestimmter zweiter Schwellenwert. So kann, insbesondere während der Grobsuche, der Nutzer des suchenden Suchgeräts dazu aufgefordert werden, sich schneller fortzubewegen, etwa durch eine Sprachnachricht wie: "Gehe schneller". So kann sichergestellt werden, dass der Ort, an welchem sich das sendende Suchgerät befindet, möglichst rasch erreicht wird.

Vorzugsweise ist die Steuerungseinrichtung dazu ausgebildet, als das wenigstens eine Ereignis zu berücksichtigen, ob anhand des von der Empfangseinheit empfangenen Sendesignals das weitere Lawinen-Verschütteten-Suchgerät zu lokalisieren ist. Dadurch kann dem Nutzer des empfangenden Suchgeräts mittels der wenigstens einen Sprachnachricht beispielsweise mitgeteilt werden, dass er eine Signalsuche durchführen soll, bei welcher der Lawinenkegel mit einer bestimmten Suchstreifenbreite abgesucht werden soll. Kann dann das weitere beziehungsweise sendende Suchgerät ausreichend genau lokalisiert werden, so kann dem Nutzer des empfangenden Suchgeräts mitgeteilt werden, dass ein Sender erkannt wurde und dass dieser sich ausgehend von dem suchenden beziehungsweise empfangenden Suchgerät in einer bestimmten Richtung befindet. Durch Laufen in diese Richtung kann sich der Nutzer des empfangenden Suchgeräts dem sendenden beziehungsweise verschütteten Suchgerät annähern. Es lässt sich so eine besonders rasche und effiziente Suche realisieren.

Von Vorteil ist es weiterhin, wenn die Steuerungseinrichtung dazu ausgebildet ist, als das wenigstens eine Ereignis zu berücksichtigen, ob das Lawinen-Verschütteten-Suchgerät in einen Suchmodus oder in einen von dem Suchmodus verschiedenen Modus gebracht ist. Der Suchmodus kann beispielsweise durch Betätigen eines Bedienelements wie etwa eines Schalters des Suchgeräts eingestellt werden, insbesondere durch Umlegen oder Drehen des Schalters in eine bestimmte Stellung. Daraufhin kann als die Sprachnachricht ausgegeben werden, dass der Suchmodus aktiv ist, etwa durch die Sprachnachricht "Suche aktiviert". Wird der Schalter hingegen wieder in seine Ausgangsstellung bewegt, so kann über die Sprachnachricht dem Nutzer mitgeteilt werden, dass ein Sendemodus des Lawinen-Verschütteten-Suchgeräts aktiv ist, etwa durch die Sprachnachricht "Senden aktiviert".

Des Weiteren kann sich durch Betätigen wenigstens eines Bedienelements wie etwa einer Taste und/oder eines Schalters wenigstens ein weiterer von dem Suchmodus verschiedener Modus aktivieren lassen. Beispielsweise kann nach dem Betätigen einer Taste, welches von der Steuerungseinrichtung erfasst wird, dem Nutzer des Suchgeräts mitgeteilt werden, dass sich das Suchgerät nun in einem Standby-Modus befindet, etwa durch die Sprachnachricht "Standby aktiviert". In einem solchen Standby-Modus sendet das Suchgerät nicht, sodass ein sich in der Nähe befindendes, suchendes Suchgerät nicht gestört wird. Dieser Standby-Modus kann beispielsweise eingestellt werden, wenn ein Helfer einen Verschütteten freilegt, jedoch gerade nicht an der Suche nach einem weiteren Verschütteten beteiligt ist. Insbesondere kann vorgesehen sein, dass nach Ablauf einer bestimmten Zeitspanne, in welcher das in den Standby-Modus versetze Suchgerät nicht bewegt wird, die Steuerungseinrichtung das Suchgerät aus dem Standby-Modus wieder in den Sendemodus schaltet. Dies kann beispielsweise dann sinnvoll sein, wenn der Helfer seinerseits von einer Nachlawine verschüttet wird.

Durch Betätigen wenigstens eines Bedienelements, etwa durch Betätigen eines Schalters und/oder einer Taste, kann des Weiteren ein Gruppenprüfmodus aktiviert werden, in welchem die Suchgeräte der Mitglieder einer Gruppe daraufhin getestet werden, ob sie einwandfrei senden. Auch das Einstellen eines solchen Gruppenprüfmodus kann durch Ausgeben der Sprachnachricht bestätigt werden, beispielsweise durch die Sprachnachricht "Group Check aktiviert".

Vorzugsweise ist die Steuereinrichtung dazu ausgebildet, dann den wenigstens einen Lautsprecher zum Ausgeben der zumindest einen Sprachnachricht anzusteuern, wenn über eine vorbestimmte Anzahl von aufeinanderfolgenden Sendesignalen des weiteren Lawinen-Verschütteten-Suchgeräts hinweg eine von einem Nutzer des Lawinen-Verschütteten-Suchgeräts eingeschlagene Suchrichtung von einer einzuschlagenden Suchrichtung um mehr als ein vorbestimmtes Maß abweicht. So kann die Suche bei Bedarf korrigiert werden, etwa durch Sprachnachrichten beziehungsweise Kommandos wie "Halte Dich rechts" oder "Halte Dich links".

Damit jedoch nicht bereits kleinere Abweichungen der tatsächlichen Suchrichtung von der einzuschlagenden Suchrichtung zur Ausgabe von Sprachnachrichten führen, welche dann häufig wechseln könnten, wird eine solche Korrektur bevorzugt nur dann vorgenommen, wenn die Abweichung signifikant ist, etwa weil die tatsächliche Suchrichtung mehrmals nacheinander um mehr als das vorbestimmte Maß von der einzuschlagenden Suchrichtung abgewichen ist. So lässt sich die Suche mit einfach zu befolgenden und den Suchenden unterstützenden Sprachnachrichten verbessern beziehungsweise vereinfachen, ohne dass der Nutzer des empfangenden Suchgeräts verwirrt wird.

In analoger Weise kann die Steuerungseinrichtung dazu ausgebildet sein, dann den wenigstens einen Lautsprecher zum Ausgeben der zumindest einen Sprachnachricht anzusteuern, wenn über eine vorbestimmte Anzahl von aufeinanderfolgenden Sendesignalen des weiteren Lawinen-Verschütteten-Suchgeräts hinweg eine empfangene Stärke des Sendesignals des weiteren Lawinen-Verschütteten-Suchgeräts um mehr als ein vorbestimmtes Maß abnimmt. Dann kann nämlich davon ausgegangen werden, dass sich der Nutzer des empfangenden Suchgeräts von dem sendenden Suchgerät entfernt. Eine dann ausgegebene Sprachnachricht kann beispielsweise lauten: "Du entfernst Dich. Kehre um". Auch hier wird die zur Umkehr auffordernde Sprachnachricht nicht bei jeder Abnahme der gemessenen Stärke des Sendesignals vorgenommen, sondern erst dann, wenn über die vorbestimmte Anzahl von aufeinanderfolgenden Sendesignalen hinweg die Stärke des Sendesignals abnimmt. Dadurch lassen sich unzutreffende oder überflüssige Sprachausgaben vermeiden.

Vorzugsweise ist die Steuereinrichtung dazu ausgebildet, als das wenigstens eine Ereignis wenigstens eine Bedieneingabe eines Nutzers des Lawinen-Verschütteten-Suchgeräts zu berücksichtigen. Beispielsweise kann nach dem Auffinden einer Stelle, an welcher sich ein verschüttetes, sendendes Suchgerät befindet, die entsprechende Stelle markiert werden, sodass an dieser Stelle mit dem Sondieren beziehungsweise Schaufeln begonnen werden kann. Während ein weiterer Helfer derartige Tätigkeiten durchführt, kann mittels des suchenden beziehungsweise empfangenden Suchgeräts ein weiterer verschütteter Sender gesucht werden. Mittels der Bedieneingabe kann also beispielsweise der Steuerungseinrichtung mitgeteilt werden, dass die Suche eines sendenden Suchgeräts abgeschlossen ist. Hierfür kann beispielsweise eine Bedientaste gedrückt werden. Als entsprechende Sprachnachricht kann daraufhin ein Text wie "Sender markiert" ausgegeben werden. Des Weiteren kann dem Nutzer des empfangenden Suchgeräts mitgeteilt werden, dass ein weiterer Sender erkannt wurde, also ein weiteres Lawinen-Verschütteten-Suchgerät, welches ein Sendesignal aussendet. Eine entsprechende Sprachnachricht kann lauten: "Neuer Sender erkannt".

Als weiter vorteilhaft hat es sich gezeigt, wenn die Steuerungseinrichtung dazu ausgebildet ist, als das wenigstens eine Ereignis eine Handhabung des Lawinen-Verschütteten-Suchgeräts durch den Nutzer zu berücksichtigen. Beispielsweise kann ein Signal eines Neigungssensors des empfangenden Suchgeräts ausgewertet werden um festzustellen, dass das suchende Suchgerät nicht ausreichend waagrecht gehalten wird. Auf das Vorliegen einer solchen nicht korrekten Handhabung kann insbesondere dann von der Steuerungseinrichtung geschlossen werden, wenn diese ungünstige Handhabung des Suchgeräts länger als eine vorbestimmte Zeitspanne von beispielsweise etwa 2 Sekunden bis etwa 10 Sekunden, insbesondere länger als 5 Sekunden, andauert. Dann kann dem Nutzer eine Sprachnachricht wie etwa "Halte die Hand horizontal" ausgegeben werden.

In analoger Weise kann eine zu unruhige Handhabung des Lawinen-Verschütteten-Suchgeräts dem Nutzer mitgeteilt werden. Hierbei können beim Bewegen des empfangenden Suchgeräts auftretende Geschwindigkeiten, insbesondere Winkelgeschwindigkeiten, gemessen und die Messwerte von der Steuerungseinrichtung ausgewertet werden. Stellt die Steuerungseinrichtung hierbei fest, dass das Suchgerät zu wild beschleunigt wird, so kann diese, nicht korrekte Handhabung des Suchgeräts dem Nutzer desselben durch eine Sprachnachricht wie etwa "Halte die Hand ruhiger" mitgeteilt werden. Durch derartige Korrekturen der Handhabung des Lawinen-Verschütteten-Suchgeräts wird eine rasche, zielführende Suche mittels des empfangenden Suchgeräts erleichtert.

Vorzugsweise weist das Lawinen-Verschütteten-Suchgerät einen Speicher auf, in welchem eine Mehrzahl von Sprachnachrichten in einer Mehrzahl von Sprachen abgelegt ist. Beispielsweise können in jeweiligen Sprachen erstellte Sprachdateien beziehungsweise Audiodateien in dem Speicher abgelegt sein, welche über einen Lautsprecher des Lawinen-Verschütteten-Suchgeräts ausgegeben werden können. Durch ein Einstellen der Sprache bei einem Konfigurieren des Lawinen-Verschütteten-Suchgeräts kann so sehr einfach vorgegeben werden, in welcher gewünschten Ausgabesprache die Sprachnachrichten dem Nutzer des suchenden Suchgeräts übermittelt werden sollen. Eine derartige Sprachausgabe in voneinander verschiedenen Sprachen lässt sich besonders einfach realisieren.

Des Weiteren kann vorgesehen sein, dass das Lawinen-Verschütteten-Suchgerät einen Speicher aufweist, in welchem eine Mehrzahl von vorbestimmten Texten abgelegt ist. Basierend auf derartigen Texten lassen sich besonders einfach vorbestimmte Sprachnachrichten generieren.

Vorzugsweise weist das Lawinen-Verschütteten-Suchgerät eine Umwandlungseinrichtung auf, mittels welcher ein jeweiliger Text in die zumindest eine Sprachnachricht umsetzbar ist. Die Erstellung der Sprachnachricht beziehungsweise des Sprachkommandos basiert dann auf dem jeweiligen Text. Die Umwandlungseinrichtung kann also zur Sprachsynthese ausgebildet sein, etwa durch eine Text-to-Speech-Software und/oder eine Text-to-Speech-Firmware. Eine solche Software oder Firmware wandelt einen Text in eine akustische Sprachausgabe um. Dadurch lassen sich bei Bedarf weitere Sprachnachrichten generieren, etwa indem in dem Speicher weitere Texte abgelegt werden, welche dann mittels der Umwandlungseinrichtung umgesetzt beziehungsweise umgewandelt werden können.

Insbesondere kann vorgesehen sein, dass in dem Speicher die vorbestimmten Texte in einer Mehrzahl von Sprachen vorliegen. Dann braucht bloß der bereits in der gewünschten Sprache vorhandene Text mittels der Umwandlungseinrichtung in die Sprachnachricht umgesetzt zu werden. Dies macht das Ausgeben der Sprachnachricht in der gewünschten Sprache besonders einfach.

Zusätzlich oder alternativ kann vorgesehen sein, dass mittels der Umwandlungseinrichtung der jeweilige Text in einer Mehrzahl von Sprachen ausgegeben werden kann. Auch auf diese Weise kann insbesondere sichergestellt werden, dass die Sprachnachricht für den jeweiligen Nutzer leicht verständlich ist. Eine gewünschte Ausgabesprache kann beispielsweise beim Konfigurieren des Lawinen-Verschütteten-Suchgeräts eingestellt werden.

Der wenigstens eine Lautsprecher kann zusätzlich in eine von dem Lawinen-Verschütteten-Suchgerät verschiedene Vorrichtung integriert sein, etwa in ein mobiles Endgerät wie ein Smartphone oder dergleichen und/oder in einen Helm eines Nutzers des Lawinen-Verschütteten-Suchgeräts. So kann während der Suche der Lautsprecher nahe am Ohr des Suchenden platziert werden beziehungsweise bleiben.

Eine Anzeigeeinheit zum Anzeigen von Hinweisen für die Suche nach dem wenigstens einen weiteren Lawinen-Verschütteten-Suchgerät kann ebenfalls in die von dem Lawinen-Verschütteten-Suchgerät verschiedene Vorrichtung integriert sein, etwa in ein mobiles Endgerät, insbesondere in ein Smartphone oder dergleichen. Dann kann mittels einer solchen Vorrichtung die Suche nach dem sendenden Suchgerät erleichtert werden.

Vorzugsweise weist das Lawinen-Verschütteten-Suchgerät eine mittels der Steuerungseinrichtung ansteuerbare Anzeigeeinheit auf, welche dem Anzeigen von Hinweisen für die Suche nach dem wenigstens einen weiteren Lawinen-Verschütteten-Suchgerät dient. Dann kann die durch das Ausgeben der Sprachnachrichten erleichterte Suche nach dem sendenden Suchgerät zusätzlich durch die Hinweise auf der Anzeige des Suchgeräts unterstützt werden, und die Suche erfolgt besonders zielgerichtet und rasch.

Es hat sich als vorteilhaft gezeigt, wenn die Steuerungseinrichtung dazu ausgebildet ist, die Anzeigeeinheit in Abhängigkeit von der zumindest einen Sprachnachricht anzusteuern. So kann beispielsweise ein Wechsel von auf der Anzeigeeinheit dargestellten Hinweisen zeitlich mit dem Ausgeben der Sprachnachricht einhergehen. Dadurch kann insbesondere ein von dem Benutzer des empfangenden Suchgeräts vorzunehmender Wechsel der Suchstrategie, etwa ein Übergang von der Signalsuche zur Grobsuche beziehungsweise von der Grobsuche zur Feinsuche, besonders gut verdeutlicht werden. Auch dies ist dem raschen Auffinden des sendenden Suchgeräts zuträglich.

Insbesondere kann die Steuerungseinrichtung dazu ausgebildet sein, das Ausgeben der zumindest einen Sprachnachricht mittels des wenigstens einen Lautsprechers in einer vorbestimmten zeitlichen Beziehung zu dem Anzeigen zumindest eines Hinweises für die Suche nach dem wenigstens einen weiteren Lawinen-Verschütteten-Suchgerät auf der Anzeigeeinheit zu bewirken. Beispielsweise kann während des Ausgebens der Sprachnachricht der zumindest eine Hinweis auf der Anzeigeeinheit dargestellt werden. Ein bezogen auf das Ausgeben der Sprachnachricht zumindest zeitnahes Darstellen des Hinweises ist bevorzugt. Es kann die Sprachnachricht bereits begonnen haben, wenn der Hinweis dargestellt wird, oder es kann das Darstellen des Hinweises bereits erfolgen, kurz bevor das Ausgeben der Sprachnachricht beginnt. Durch ein solches direktes, insbesondere zeitgleiches, Ansteuern der Anzeigeeinheit und des Lautsprechers kann dem Nutzer des suchenden Suchgeräts besonders gut verdeutlicht werden, wie er bei der Suche nach dem sendenden Suchgerät vorgehen soll.

Des Weiteren kann ein Wechsel von auf der Anzeige beziehungsweise Anzeigeeinheit dargestellten Hinweisen stattfinden, ohne dass dies von einer Sprachnachricht begleitet wird. Zudem kann auch bei gleichbleibender Darstellung von Inhalten oder Hinweisen auf der Anzeigeeinheit eine Sprachnachricht ausgegeben werden.

Bei dem erfindungsgemäßen Verfahren zum Betreiben eines Lawinen-Verschütteten-Suchgeräts, welches eine Sendeeinheit zum Senden wenigstens eines Sendesignals und eine Empfangseinheit zum Empfangen wenigstens eines Sendesignals aufweist, welches von wenigstens einem weiteren Lawinen-Verschütteten-Suchgerät ausgegeben wird, wird von einer Steuerungseinrichtung des Lawinen-Verschütteten-Suchgeräts wenigstens ein Lautsprecher angesteuert. Hierbei steuert die Steuerungseinrichtung den wenigstens einen Lautsprecher derart an, dass der wenigstens eine Lautsprecher zumindest eine Sprachnachricht ausgibt. Der wenigstens eine Lautsprecher wird von der Steuerungseinrichtung in Abhängigkeit von wenigstens einem Ereignis angesteuert, welches mit einer Suche nach dem wenigstens einen weiteren Lawinen-Verschütteten-Suchgerät in Zusammenhang steht. Dementsprechend ist das erfindungsgemäße Lawinen-Verschütteten-Suchgerät zur Durchführung des erfindungsgemäßen Verfahrens ausgebildet, welches die Suche nach dem sendenden beziehungsweise weiteren Lawinen-Verschütteten-Suchgerät vereinfacht.

Die für das erfindungsgemäße Lawinen-Verschütteten-Suchgerät erläuterten Vorteile und bevorzugten Ausführungsformen gelten auch für das erfindungsgemäße Verfahren und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer schematischen vorderseitigen Ansicht ein Lawinen-Verschütteten-Suchgerät, welches sich in einem Sendemodus befindet;
- Fig. 2: das Lawinen-Verschütteten-Suchgerät gemäß Fig. 1, welches sich in einem Suchmodus befindet und ein Sendesignal eines weiteren Lawinen-Verschütteten-Suchgeräts empfängt;
- Fig. 3: das Lawinen-Verschütteten-Suchgerät gemäß Fig. 2 in einer rückwärtigen Ansicht;
- Fig. 4: das Lawinen-Verschütteten-Suchgerät gemäß Fig. 2 in einer Seitenansicht;
- Fig. 5: das Lawinen-Verschütteten-Suchgerät gemäß Fig. 2, wobei auf einer Anzeige des Suchgeräts ein Hinweis dargestellt ist, eine Signalsuche durchzuführen und hierbei einen Lawinenkegel in Suchstreifen abzulaufen;
- Fig. 6: die Anzeige des Suchgeräts, nachdem ein Sender erkannt wurde;
- Fig. 7: die Anzeige des Suchgeräts während einer Grobsuche nach dem erkannten Sender, wobei ein weiterer Sender, also ein weiteres sendendes Suchgerät lokalisiert wurde;
- Fig. 8: die Anzeige des Suchgeräts, wobei ein Wechsel in eine Direktsuche angezeigt wird;
- Fig. 9: die Anzeige des Suchgeräts, wobei das Lokalisieren eines weiteren sendenden Suchgeräts beziehungsweise Senders während der Direktsuche dargestellt ist;
- Fig. 10: das Darstellen eines Hinweises auf der Anzeige des Suchgeräts, dass eine kreuzförmige Feinsuche durchgeführt werden soll;
- Fig. 11: das Darstellen auf der Anzeige des Suchgeräts, dass das sendende Suchgerät mittels der Feinsuche genau lokalisiert werden konnte;
- Fig. 12: die Anzeige des Suchgeräts, wobei das Markieren des lokalisierten Senders beziehungsweise lokalisierten Suchgeräts dargestellt ist;
- Fig. 13: die Anzeige des Suchgeräts, wobei eine Suchrichtung zu einem weiteren der erkannten Sender angegeben ist;
- Fig. 14: die Anzeige des Suchgeräts, wobei das Markieren des weiteren Senders nach dessen genauer Lokalisierung dargestellt ist; und
- Fig. 15: die Anzeige des Suchgeräts, wobei das Erkennen eines weiteren Senders derart erfolgt ist, dass eine stabile Zielführung zu diesem weiteren Sender möglich ist.

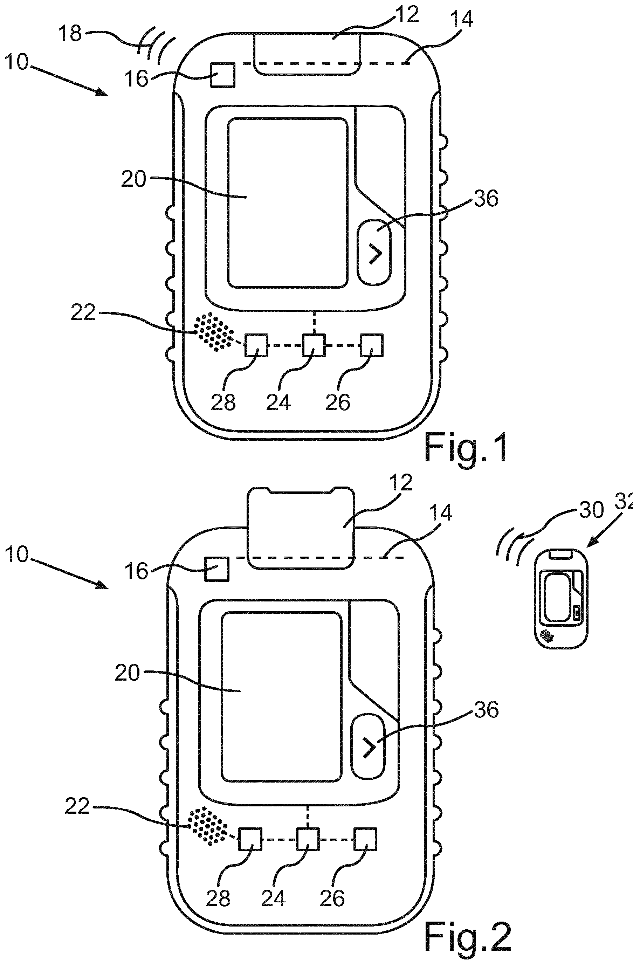

Fig. 1 zeigt schematisch und in einer Frontansicht ein Lawinen-Verschütteten-Suchgerät 10, welches sich in einem Sendemodus befindet. Dementsprechend befindet sich ein Bedienelement in Form eines Schalters 12, welcher um eine Schwenkachse 14 aus der in Fig. 1 gezeigten Stellung in die in Fig. 2 gezeigte Stellung des Schalters 12 verschwenkbar ist, in einer Grundstellung oder Ausgangsstellung. Eine Sende- und Empfangseinheit 16 des Lawinen-Verschütteten-Suchgeräts 10 funktioniert somit als Sendeeinheit und gibt ein in Fig. 1 schematisch dargestelltes Sendesignal 18 ab. Das Sendesignal 18 kann von einem weiteren Lawinen-Verschütteten-Suchgerät empfangen werden, welches sich im Suchmodus befindet. Die Sende- und Empfangseinheit 16 kann eine Mehrzahl von Antennen umfassen, insbesondere drei orthogonal zueinander ausgerichtete Antennen, welche im Sendemodus (vergleiche Fig. 1) als Sendeantennen und im Empfangsmodus (vergleiche Fig. 2) als Empfangsantennen dienen.

Das Lawinen-Verschütteten-Suchgerät 10 weist des Weiteren eine Anzeigeeinheit oder Anzeige 20 und einen Lautsprecher 22 auf. Eine Steuerungseinrichtung 24 steuert die Anzeige 20 und den Lautsprecher 22 an. Vorliegend lassen sich über den Lautsprecher 22 dann, wenn dieser von der Steuerungseinrichtung 24 entsprechend angesteuert wird, Sprachnachrichten ausgeben. Hierfür weist das Lawinen-Verschütteten-Suchgerät 10 einen Speicher 26 auf, in welchem Texte und/oder die Sprachnachrichten abgelegt sind. Insbesondere wenn in dem Speicher 26 Texte abgelegt sind, lassen sich mittels einer Umwandlungseinrichtung 28 die in dem Speicher 26 gespeicherten Texte in jeweilige Sprachnachrichten umsetzen beziehungsweise umwandeln, um die Suche nach einem sendenden Lawinen-Verschütteten-Suchgerät 10 (vergleiche Fig. 1) zu vereinfachen beziehungsweise zu erleichtern. Insbesondere können des Weiteren die Sprachnachrichten als Sprachdateien in dem Speicher 26 in einer Mehrzahl von Sprachen abgelegt sein, wobei bevorzugt eine Ausgabesprache des Lawinen-Verschütteten-Suchgeräts 10 beim Konfigurieren desselben vorgegeben werden kann. Die Umwandlungseinrichtung 28 und/oder der Speicher 26 können in die Steuerungseinrichtung 24 integriert sein beziehungsweise als jeweilige Komponenten der Steuerungseinrichtung 24 ausgebildet sein.

Anhand von Fig. 2 soll eine Situation veranschaulicht werden, in welcher das Lawinen-Verschütteten-Suchgerät 10 durch Bewegen, insbesondere Verschwenken beziehungsweise Drehen des Schalters 12 um die Schwenkachse 14, in einen Suchmodus versetzt wurde. Dementsprechend dient dann die Sende- und Empfangseinheit 16 als Empfangseinheit zum Empfangen eines Sendesignals 30, welches von einem weiteren Lawinen-Verschütteten-Suchgerät 32 ausgesendet wird. Das vorliegend lediglich schematisch dargestellte weitere Lawinen-Verschütteten-Suchgerät 32 kann mit dem in Fig. 1 dargestellten Lawinen-Verschütteten-Suchgerät 10 baugleich ausgebildet sein. Um festzustellen, ob sich das Lawinen-Verschütteten-Suchgerät 10 im Sendemodus (vergleiche Fig. 1) oder im Suchmodus (vergleiche Fig. 2) befindet, kann die Steuerungseinrichtung 24 eine Stellung des Schalters 12 auswerten. In Abhängigkeit davon kann dann die Steuerungseinrichtung 24 den Lautsprecher 22 ansteuern, sodass dieser eine Sprachnachricht wie etwa "Senden aktiviert" (vergleiche Fig. 1) beziehungsweise "Suchen aktiviert" (vergleiche Fig. 2) ausgibt. Auf der Anzeige 20 kann im Sendemodus des Lawinen-Verschütteten-Suchgeräts 10 ein entsprechendes Symbol dargestellt werden, welches den Sendemodus veranschaulicht.

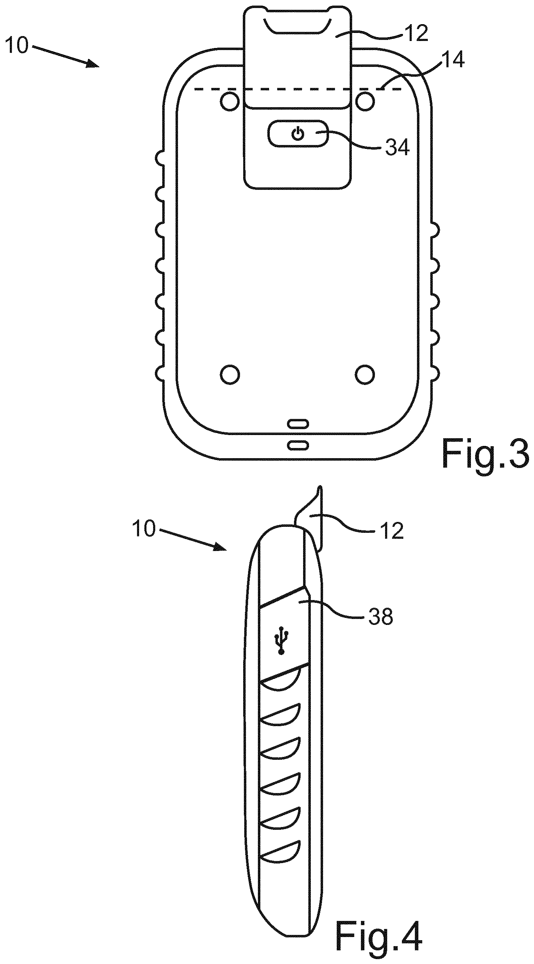

Aus der rückwärtigen, in Fig. 3 dargestellten Ansicht des Lawinen-Verschütteten-Suchgeräts 10, welches sich im Suchmodus (vergleiche Fig. 2) befindet, ist ersichtlich, dass an der Rückseite des Lawinen-Verschütteten-Suchgeräts 10 ein weiterer Schalter 34 zum Einschalten und Ausschalten angeordnet sein kann. Mittels dieses Schalters 34 lässt sich das Lawinen-Verschütteten-Suchgerät 10 in Betrieb nehmen beziehungsweise ausschalten. Zum Bestätigen des Ausschaltens kann es erforderlich sein, eine weitere Taste 36 zu betätigen, welche vorliegend an der Frontseite des Lawinen-Verschütteten-Suchgeräts 10 neben der Anzeige 20 angeordnet ist.

Aus der Ansicht in Fig. 4 ist der in seine Sendeposition gedrehte Schalter 12 nochmals ersichtlich, wobei auch eine Abdeckung 38 in einer Geschlossenstellung gezeigt ist, welche eine Anschlussbuchse für ein Ladekabel, beispielsweise ein USB-Kabel, insbesondere ein Micro-USB-Kabel, verschließt.

Nach dem Einschalten des Lawinen-Verschütteten-Suchgeräts 10 kann durch Betätigen der Taste 36 das Lawinen-Verschütteten-Suchgerät 10, welches sich insbesondere in dem Sendemodus befindet (vergleiche Fig. 1), in einen Standby-Modus versetzt werden. Auch dieses Betätigen der Taste 36 wird von der Steuerungseinrichtung 24 ausgewertet. Daraufhin kann der Lautsprecher 22 eine Sprachnachricht wie etwa "Standby aktiviert" ausgeben. Ebenso kann durch Betätigen der Taste 36 ein Gruppenprüfmodus aktiviert werden, in welchem alle Lawinen-Verschütteten-Suchgeräte 10, 32 von Teilnehmern einer Gruppe, welche beispielsweise eine Skitour beginnt, daraufhin geprüft werden, ob diese einwandfrei senden. Auch hier kann die Steuerungseinrichtung 24 den Lautsprecher 22 ansteuern, sodass der Lautsprecher 22 eine Sprachnachricht wie beispielsweise "Group Check aktiviert" ausgibt.

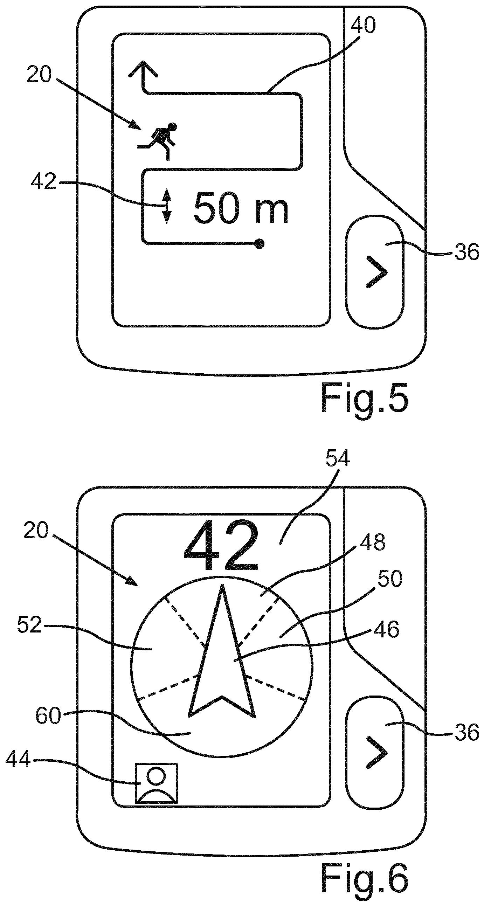

Wenn das Lawinen-Verschütteten-Suchgerät 10 sich im Suchmodus befindet (vergleiche Fig. 2), sucht die Sende- und Empfangseinheit 16 zunächst nach Sendesignalen von sendenden Suchgeräten 32 mit einer entsprechenden Empfindlichkeit, um auch weiter entfernte sendende Suchgeräte 32 zu erfassen. In Fig. 5 ist die Anzeige 20 des suchenden Suchgeräts 10 (vergleiche Fig. 2) in einer derartigen Situation gezeigt, in welcher auf der Anzeige 20 ein Hinweis beziehungsweise eine Darstellung 40 dem Nutzer des suchenden Suchgeräts 10 veranschaulicht, dass dieser den Lawinenkegel in einem bestimmten Muster ablaufen solle. Ein Suchstreifen 42, also ein Abstand zwischen zwei in entgegengesetzte Richtungen verlaufenden Suchwegen bei dieser Signalsuche, kann beispielsweise 50 Meter betragen. Die Breite des empfohlenen Suchstreifens 42 kann auf der Anzeige 20 etwa in Metern angegeben werden. Die Steuerungseinrichtung 24 steuert die Anzeige 20 zum Anzeigen der Darstellung 40 an.

Zugleich kann die Steuerungseinrichtung 24 den Lautsprecher 22 ansteuern, sodass dieser eine Sprachnachricht beziehungsweise ein Kommando wie etwa "Laufe in 50 Meter Suchstreifen" oder "Laufe in 50 Meter Suchstreifen und halte Ausschau" ausgibt. Wenn nach beispielsweise 2 Sekunden bis 6 Sekunden, insbesondere nach 3 Sekunden, einer Signalsuche mit großer Empfindlichkeit festgestellt wird, dass die Umgebung des suchenden Suchgeräts 10 nicht ausreichend frei von Störquellen ist (und auch das Sendesignal 30 des sendenden Suchgeräts 32 noch nicht mit ausreichend großer Qualität erfasst wurde), so kann auf der Anzeige 20 ein Suchstreifen 42 mit verringerter Suchstreifenbreite dargestellt werden. Zudem kann der Lautsprecher 22 die Sprachnachricht ausgeben, dass das Suchgerät 10 nun mit reduzierter Reichweite sucht und der Nutzer des suchenden Suchgeräts 10, also des sich im Suchmodus befindenden Suchgeräts 10, sich in entsprechend schmaleren Suchstreifen 42 über den Lawinenkegel bewegen soll.

Gemäß der Darstellung der Anzeige 20 in Fig. 6 erfüllt das empfangene Sendesignal 30 die Kriterien für eine stabile Zielführung. Es kann dann von der Signalsuche zur Grobsuche oder bereits zur Feinsuche übergegangen werden. Das Erkennen beziehungsweise Lokalisieren eines Senders beziehungsweise des sendenden Suchgeräts 32 kann dem Nutzer des Suchgeräts 10 auf der Anzeige 20 durch Darstellen eines Symbols 44 angezeigt werden. Hierbei kann der Lautsprecher 22 eine Sprachnachricht wie etwa "Sender erkannt" ausgeben. Zugleich gibt ein Richtungspfeil 46 die Richtung an, in welche der Nutzer des suchenden Suchgeräts 10 laufen soll.

Befindet sich der Richtungspfeil 46 in einem ersten Richtungssektor 48, so kann hierbei zugleich die Sprachnachricht von dem Lautsprecher 22 ausgegeben werden, dass der Nutzer des Suchgeräts 10 geradeaus laufen solle. Der erste Richtungssektor 48 kann ausgehend von einer Geradeausrichtung des Richtungspfeils 46, welche bei horizontal gehaltenem Suchgerät 10 nach vorne und somit geradeaus weist, bis etwa 40 Grad im Uhrzeigersinn und - 40 Grad gegen den Uhrzeigersinn reichen. Die Gradangaben beziehen sich auf eine 12-Uhr-Stellung des Richtungspfeils 46, in welcher der Richtungspfeil 46 genau geradeaus weist. Weist der Richtungspfeil 46 hingegen in eine Richtung, in welcher der Richtungspfeil 46 einem zweiten Richtungssektor 50 zugeordnet ist, so kann der Lautsprecher 22 eine Sprachnachricht wie etwa "Laufe nach rechts" ausgeben. Der zweite Richtungssektor 50 kann dementsprechend von 41 Grad im Uhrzeigersinn bis beispielsweise 110 Grad im Uhrzeigersinn reichen. Wenn der Richtungspfeil 46 hingegen einem dritten Richtungssektor 52 zugeordnet ist, so kann der Lautsprecher 22 die Sprachnachricht beziehungsweise den Befehl "Laufe nach links" ausgeben. Der dritte Richtungssektor 52 reicht beispielsweise von - 41 Grad gegen den Uhrzeigersinn bis etwa - 110 Grad gegen den Uhrzeigersinn. Wenn der Richtungspfeil 46 einem vierten Richtungssektor 60 zugeordnet ist, welcher an den zweiten Richtungssektor 50 einerseits und an den dritten Richtungssektor 52 andererseits angrenzt, so kann der Lautsprecher 22 die Sprachnachricht beziehungsweise den Befehl "Laufe nach hinten" ausgeben.

In einem Bereich 54 der Anzeige 20 kann zudem ein abgeschätzter Abstand des suchenden Suchgeräts 10 von dem sendenden Suchgerät 32 dargestellt werden, etwa durch Zahlen, welche den Abstand beispielsweise in Metern angeben. Der Richtungspfeil 46 und die Angabe des Abstands in dem Bereich 54 sind Beispiele für Hinweise für die Suche nach dem sendenden Suchgerät 32, welche auf der Anzeige 20 dargestellt werden können.

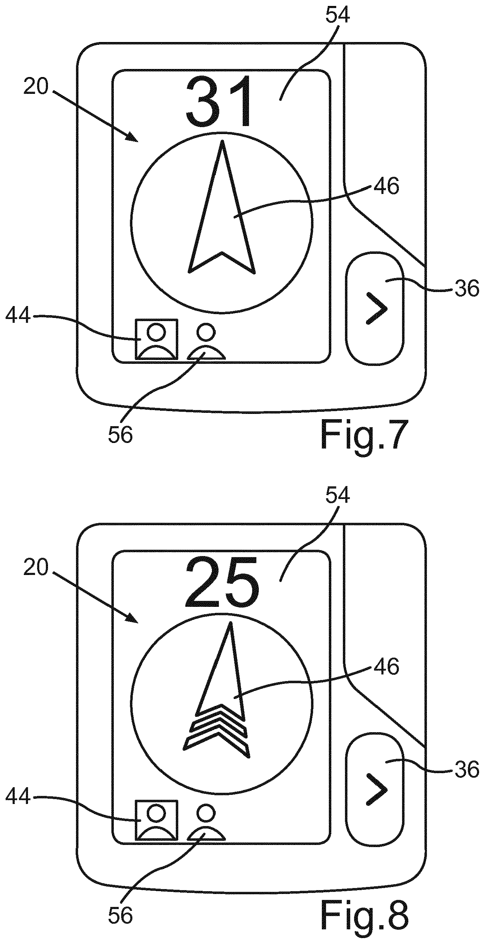

In Fig. 7 ist eine Situation dargestellt, in welcher der Richtungspfeil 46 weiter im Wesentlichen geradeaus zeigt, jedoch der Abstand des suchenden Suchgeräts 10 von dem sendenden Suchgerät 32 geringer ist. Des Weiteren ist auf der Anzeige 20 ein weiteres Symbol 56 dargestellt, welches angibt, dass die Sende- und Empfangseinheit 16 einen weiteren Sender, also ein weiteres sendendes Suchgerät, erkannt hat. Das sich in dem Suchmodus befindende Suchgerät 10 führt jedoch den Suchenden weiterhin zum nächstgelegenen Sender, welcher durch das Symbol 44 veranschaulicht ist. Es kann vorkommen, dass sich die Sendesignale 30 von zwei sendenden Suchgeräten 32 überlagern, sodass sich die Sendesignale 30 gegenseitig auslöschen. In einem solchen Fall können die Symbole 44, 56, welche die Sender veranschaulichen, in einer anderen Darstellungsform dargestellt werden als dann, wenn keine solche Signalüberlagerung vorliegt. Des Weiteren kann der Lautsprecher 22 dann eine Sprachnachricht ausgeben wie etwa "Signalüberlagerung. Laufe weiter".

Gemäß Fig. 8 kann die Steuerungseinrichtung 24 eine geänderte Darstellung des Richtungspfeils 46 bewirken, wenn von der Grobsuche, in welcher das sendende Suchgerät 32 einem der drei Richtungssektoren 48, 50, 52 zugeordnet wird, zu einer direkten Suche gewechselt wird. Zugleich mit der geänderten Darstellung des Richtungspfeils 46 kann eine Sprachnachricht mittels des Lautsprechers 22 ausgegeben werden, etwa "Direkte Suche aktiv". Bei der Direktsuche hat die Steuerungseinrichtung 24 des suchenden Suchgeräts 10 einen direkten Suchweg zum Sender beziehungsweise sendenden Suchgerät 32 berechnet. Hierbei übermittelt das sendende Suchgerät 32 an das suchende Suchgerät 10 auf wenigstens einer weiteren Frequenz weitere Daten, etwa über die Orientierung der Sendeantennen des sendenden Suchgeräts 32. Aufgrund derartiger Lagedaten kann das suchende Suchgerät 10 den Suchenden auf direktem und kürzestem Weg zu dem sendenden beziehungsweise verschütteten Suchgerät 32 führen.

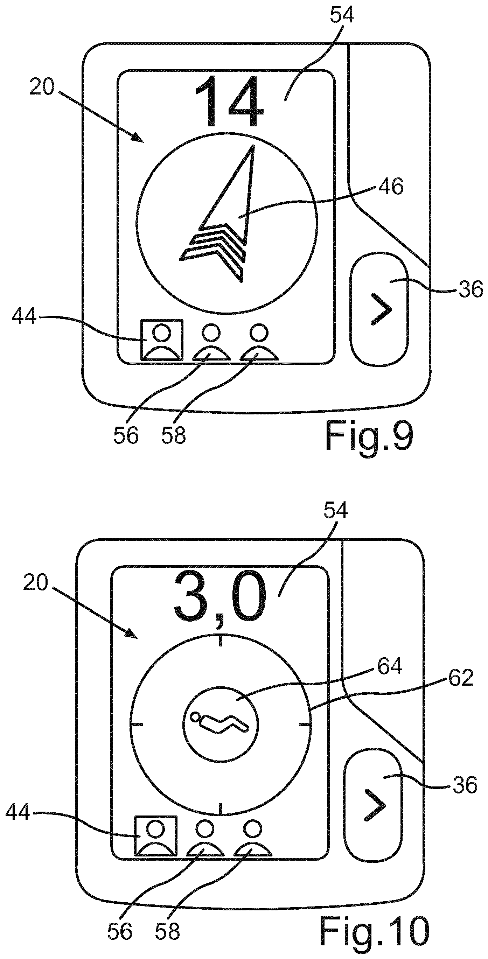

In Fig. 9 ist eine Situation veranschaulicht, in welcher während der direkten Suche ein weiterer Sender erkannt wurde. Ein entsprechendes weiteres Symbol 58 ist auf der Anzeige 20 dargestellt. Des Weiteren ist der Abstand von dem suchenden Suchgerät 10 zu dem sendenden Suchgerät 32 nochmals geringer geworden. Vorzugsweise soll sich der Suchende dem Verschütteten bis zu einer Entfernung von etwa 10 Metern so rasch wie möglich annähern, sich also so schnell wie möglich bewegen. Hierbei braucht die Suchrichtung auch nur grob zu stimmen. Bei einer Entfernung zwischen dem suchenden Suchgerät 10 und dem sendenden Suchgerät 32 von weniger als 10 Metern sollte sich der Suchende bevorzugt in Schrittgeschwindigkeit weiterbewegen. Dabei sollte dann die Suchrichtung genau stimmen.

Wenn sich der Nutzer des suchenden Suchgeräts 10 zu schnell fortbewegt, kann mittels des Lautsprechers 22 eine Sprachnachricht wie "Gehe langsamer" ausgegeben werden. Als Auslöser für das Ausgeben der Sprachnachricht kann beispielsweise herangezogen werden, dass Feldstärkenäquivalente des Sendesignals 30 der Schwellenwerte bei einem Abstand von 11 Metern und von 8 Metern zwischen dem suchenden Suchgerät 10 und dem sendenden Suchgerät 32 in weniger als 3 Sekunden überschritten werden. In analoger Weise kann mittels des Lautsprechers 22 eine Sprachnachricht wie "Gehe schneller" ausgegeben werden, wenn sich der Nutzer des suchenden Suchgeräts 10 zu langsam fortbewegt.

Das sendende Suchgerät 32 gibt das Sendesignal 30 mit einer bestimmten Frequenz ab, beispielsweise mit einer Frequenz von einem Sendepuls pro Sekunde. Es kann vorgesehen sein, dass dann, wenn viermal aufeinanderfolgend ein Sendepuls mittels der Sende- und Empfangseinheit 16 des suchenden Suchgeräts 10 erfasst wird, welcher aus einer Richtung von 25 Grad bis 110 Grad im Uhrzeigersinn bezogen auf die 12-Uhr-Richtung kommt, die Suchrichtung korrigiert werden soll. Beispielsweise kann dann der Lautsprecher 22 eine Nachricht wie "Halte Dich rechts" ausgeben. In analoger Weise kann etwa bei der vierten aufeinanderfolgenden Vermessung eines Sendepulses aus einer Richtung von - 25 Grad bis - 110 Grad gegen den Uhrzeigersinn ein Befehl wie "Halte Dich links" mittels des Lautsprechers 22 ausgegeben werden.

Ein 180-Grad-Richtungsfehler, bei welchem sich der Nutzer des suchenden Suchgeräts 10 von dem sendenden Suchgerät 32 weg bewegt, kann etwa dann angenommen werden, wenn über beispielsweise zwei bis sechs, insbesondere fünf, aufeinanderfolgende Pulse des Sendesignals 30 die von der Sende- und Empfangseinheit 16 des suchenden Suchgeräts 10 erfasste Feldstärke um ein vorbestimmtes Maß beziehungsweise über einen gewissen Pegel hinaus abnimmt. Dann kann der Nutzer des suchenden Suchgeräts 10 dazu aufgefordert werden umzukehren, etwa mittels einer Sprachnachricht wie "Du entfernst Dich. Kehre um". Wenn sich der Nutzer des suchenden Suchgeräts 10 in einem Abstand von weniger als beispielsweise 6 Metern von dem sendenden Suchgerät 32 befindet, kann der Lautsprecher 22 von der Steuerungseinrichtung 24 zum Ausgeben einer Sprachnachricht wie etwa "Gehe runter an die Schneeoberfläche" angesteuert werden. Das suchende Suchgerät 10 soll dann nahe der Schneeoberfläche über den Lawinenkegel bewegt werden.

Fig. 10 veranschaulicht den Übergang von der Grobsuche zur Feinsuche. Dies kann beispielsweise bei einem Abstand von 3 Metern oder 2,5 Metern zwischen dem suchenden Suchgerät 10 und dem sendenden Suchgerät 32 erfolgen. Der Richtungspfeil 46 verschwindet von der Anzeige 20, und stattdessen wird innerhalb eines Kreises 62 ein weiteres Symbol 64 dargestellt, welches den zu suchenden Verschütteten veranschaulicht. Bei Unterschreitung des vorbestimmten Abstands von beispielsweise 3 Metern kann der Lautsprecher 22 den Nutzer des suchenden Suchgeräts 10 zur Durchführung der kreuzförmigen Feinsuche auffordern, etwa durch eine Sprachnachricht wie "Suche kreuzförmig den kleinsten Wert". Hierbei führt der Nutzer des suchenden Suchgeräts 10 das Suchgerät 10 kreuzförmig über die Schneeoberfläche, bis in Richtung der Endpunkte des Kreuzes der jeweils geringste Wert der Entfernung angezeigt wird. Wenn während dieser Feinsuche die Entfernung zum sendenden Suchgerät 32 wieder um mehr als ein vorbestimmtes Maß zunimmt, kann dies dem Nutzer des suchenden Suchgeräts 10 über den Lautsprecher 22 mitgeteilt werden, etwa durch eine Sprachnachricht wie "Du warst bereits näher".

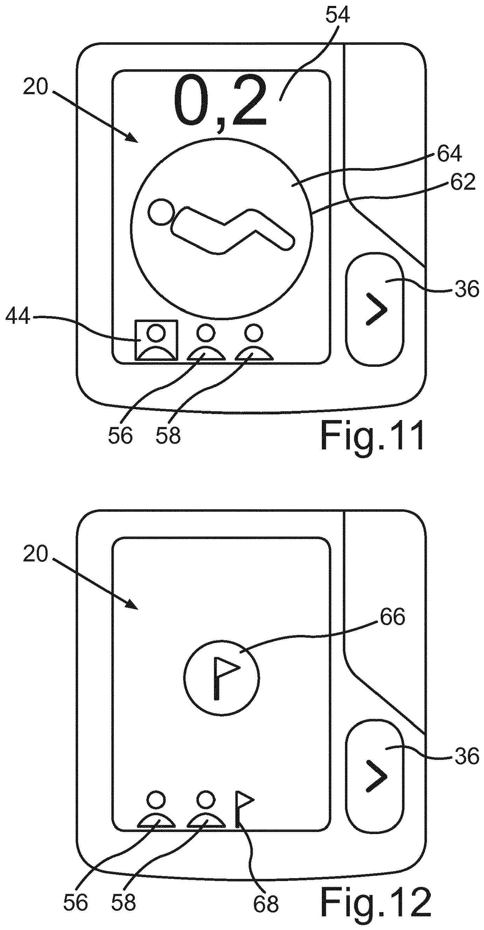

Fig. 11 veranschaulicht die Situation, in welcher auf der Anzeige 20 das genaue Lokalisieren der verschütteten und durch das Symbol 44 dargestellten Person angezeigt wird. Dementsprechend füllt das Symbol 64 den Kreis 62 vollständig aus.

Etwa durch Betätigen der Taste 36 kann der Steuerungseinrichtung 24 signalisiert werden, dass der durch das Symbol 44 dargestellte, genau lokalisierte Sender nun markiert ist und mit dem Sondieren beziehungsweise Freilegen des Verschütteten begonnen werden kann. Dies kann durch Ausgeben einer Sprachnachricht mittels des Lautsprechers 22 wie etwa "Sender markiert" dem Nutzer des suchenden Suchgeräts 10 mitgeteilt werden. Entsprechend kann gemäß der in Fig. 12 veranschaulichten Situation auf der Anzeige 20 ein Markierungssymbol 66 dargestellt werden. Auch der aufgefundene beziehungsweise markierte Sender wird dann bevorzugt in einem Bereich, in welchem die erkannten Sender durch die Symbole 44, 56, 58 dargestellt sind (vergleiche Fig. 11), durch ein Fähnchen 68 oder dergleichen veranschaulicht.

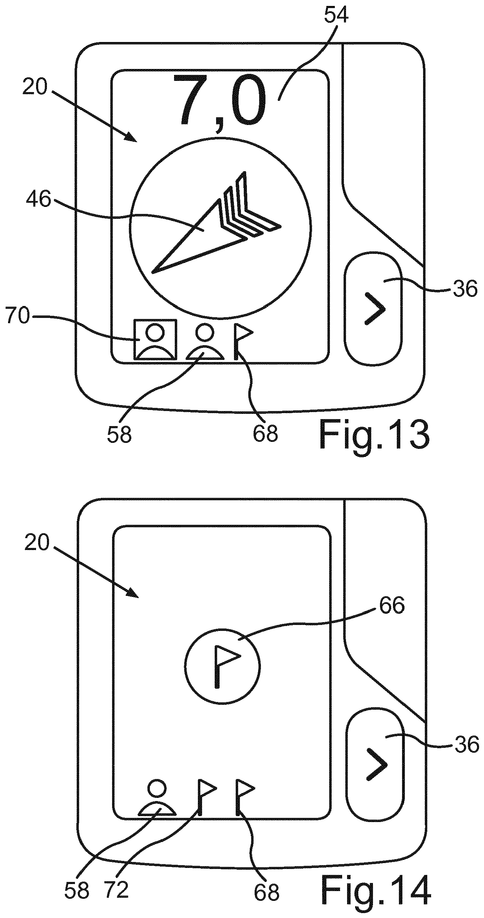

Gemäß Fig. 13 startet dann die Sendersuche nach einem weiteren, nächstgelegenen Sender, welcher in Fig. 12 durch das Symbol 56 angegeben ist. Der entsprechende Sender kann in dem Bereich der Anzeige, in welchem die Sender dargestellt sind, durch ein geändertes Symbol 70 veranschaulicht werden. Der Richtungspfeil 46 führt den Nutzer des suchenden Suchgeräts 10 zu diesem weiteren Sender beziehungsweise weiteren sendenden Suchgerät 32 (vergleiche Fig. 2).

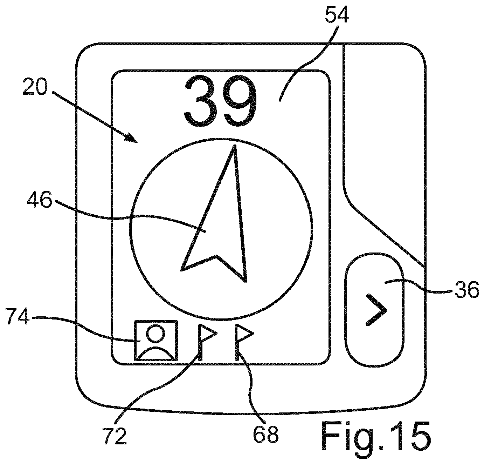

Nach Auffinden des weiteren Verschütteten und Markieren des Senders kann gemäß Fig. 14 ein weiteres Fähnchen 72 anstelle des Symbols 70 (vergleiche Fig. 13) auf der Anzeige 20 dargestellt werden. Dann beginnt gemäß Fig. 15 die Zielführung zu dem verbleibenden weiteren Sender, welcher neben den Fähnchen 68, 72 als geändertes Symbol 74 dargestellt werden kann. Der Richtungspfeil 46 gibt hierbei die Suchrichtung zu diesem weiteren sendenden Suchgerät 32 an (vergleiche Fig. 2).

Es kann vorgesehen sein, dass der Lautsprecher 22 jeweils eine Sprachnachricht wie etwa "Nächster Sender. Laufe geradeaus" ausgibt, wenn nach dem Markieren eines Senders die Suche nach der nächstgelegenen verschütteten Person beginnt, welche das sendende Suchgerät 32 mit sich führt. Je nach einzuschlagender Suchrichtung kann auch eine Sprachnachricht wie etwa "Nächster Sender. Laufe nach links", "Nächster Sender. Laufe nach rechts" oder "Nächster Sender. Laufe zurück" von dem Lautsprecher 22 ausgegeben werden.

## Patentansprüche

1. Lawinen-Verschütteten-Suchgerät, mit einer Sendeeinheit (16) zum Senden wenigstens eines Sendesignals (18), einer Empfangseinheit (16) zum Empfangen wenigstens eines Sendesignals (30) von wenigstens einem weiteren Lawinen-Verschütteten-Suchgerät (32), und mit einer Steuerungseinrichtung (24) zum Ansteuern wenigstens eines Lautsprechers (22),
wobei die Steuerungseinrichtung (24) dazu ausgebildet ist, in Abhängigkeit von wenigstens einem Ereignis den wenigstens einen Lautsprecher (22) zum Ausgeben zumindest einer Sprachnachricht anzusteuern, wobei das wenigstens eine Ereignis mit einer Suche nach dem wenigstens einen weiteren Lawinen-Verschütteten-Suchgerät (32) in Zusammenhang steht, wobei das Lawinen-Verschütteten-Suchgerät (10) den wenigstens einen Lautsprecher (22) aufweist und der wenigstens eine Lautsprecher (22) dazu ausgebildet ist, wenigstens ein Tonsignal auszugeben,
**dadurch gekennzeichnet, dass**
das wenigstens ein Tonsignal mit der Suche nach dem wenigstens einen weiteren Lawinen-Verschütteten-Suchgerät (32) in Zusammenhang steht, wobei die Steuerungseinrichtung (24) dazu ausgebildet ist, den wenigstens einen Lautsprecher (22) derart anzusteuern, dass das wenigstens eine Tonsignal während des Ausgebens der zumindest einen Sprachnachricht unterdrückt wird oder mit einer verringerten Lautstärke ausgegeben wird.

2. Lawinen-Verschütteten-Suchgerät nach Anspruch 1,
**dadurch gekennzeichnet, dass**
die Steuerungseinrichtung (24) dazu ausgebildet ist, dann den wenigstens einen Lautsprecher (22) zum Ausgeben der zumindest einen Sprachnachricht anzusteuern, wenn die Empfangseinheit (16) eine Veränderung einer empfangenen Stärke und/oder einer empfangenen Qualität des Sendesignals (30) des weiteren Lawinen-Verschütteten-Suchgeräts (32) und/oder eine Veränderung einer Richtung erfasst, aus welcher das Sendesignal (30) des weiteren Lawinen-Verschütteten-Suchgeräts (32) kommt.

3. Lawinen-Verschütteten-Suchgerät nach Anspruch 1 oder 2,
**dadurch gekennzeichnet, dass**
die Steuerungseinrichtung (24) dazu ausgebildet ist, durch Auswerten des von der Empfangseinheit (16) empfangenen Sendesignals (30) einen Abstand von dem weiteren Lawinen-Verschütteten-Suchgerät (32) abzuschätzen, und den wenigstens einen Lautsprecher (22) dann zum Ausgeben der zumindest einen Sprachnachricht anzusteuern, wenn der Abstand geringer oder eine Zunahme des Abstands größer ist als ein vorbestimmter Schwellenwert.

4. Lawinen-Verschütteten-Suchgerät nach einem der Ansprüche 1 bis 3,
**dadurch gekennzeichnet, dass**
die Steuerungseinrichtung (24) dazu ausgebildet ist, durch Auswerten des von der Empfangseinheit (16) empfangenen Sendesignals (30) eine Geschwindigkeit abzuschätzen, mit welcher sich ein Abstand von dem weiteren Lawinen-Verschütteten-Suchgerät (32) verändert, insbesondere verringert, und den wenigstens einen Lautsprecher (22) dann zum Ausgeben der zumindest einen Sprachnachricht anzusteuern, wenn die Geschwindigkeit größer ist als ein vorbestimmter erster Schwellenwert oder kleiner als ein vorbestimmter zweiter Schwellenwert.

5. Lawinen-Verschütteten-Suchgerät nach einem der Ansprüche 1 bis 4,
**dadurch gekennzeichnet, dass**
die Steuerungseinrichtung (24) dazu ausgebildet ist, als das wenigstens eine Ereignis zu berücksichtigen, ob anhand des von der Empfangseinheit (16) empfangenen Sendesignals (30) das weitere Lawinen-Verschütteten-Suchgerät (32) zu lokalisieren ist.

6. Lawinen-Verschütteten-Suchgerät nach einem der Ansprüche 1 bis 5,
**dadurch gekennzeichnet, dass**
die Steuerungseinrichtung (24) dazu ausgebildet ist, als das wenigstens eine Ereignis zu berücksichtigen, ob das Lawinen-Verschütteten-Suchgerät (10) in einen Suchmodus oder in einen von dem Suchmodus verschiedenen Modus gebracht ist.

7. Lawinen-Verschütteten-Suchgerät nach einem der Ansprüche 1 bis 6,
**dadurch gekennzeichnet, dass**
die Steuerungseinrichtung (24) dazu ausgebildet ist, dann den wenigstens einen Lautsprecher (22) zum Ausgeben der zumindest einen Sprachnachricht anzusteuern, wenn über eine vorbestimmte Anzahl von aufeinanderfolgenden Sendesignalen (30) des weiteren Lawinen-Verschütteten-Suchgeräts (32) hinweg eine von einem Nutzer des Lawinen-Verschütteten-Suchgeräts (10) eingeschlagene Suchrichtung von einer einzuschlagenden Suchrichtung um mehr als ein vorbestimmtes Maß abweicht und/oder eine empfangene Stärke des Sendesignals (30) des weiteren Lawinen-Verschütteten-Suchgeräts (32) um mehr als ein vorbestimmtes Maß abnimmt.

8. Lawinen-Verschütteten-Suchgerät nach einem der Ansprüche 1 bis 7,
**dadurch gekennzeichnet, dass**
die Steuerungseinrichtung (24) dazu ausgebildet ist, als das wenigstens eine Ereignis wenigstens eine Bedieneingabe eines Nutzers des Lawinen-Verschütteten-Suchgeräts (10) und/oder eine Handhabung des Lawinen-Verschütteten-Suchgeräts (10) durch den Nutzer zu berücksichtigen.

9. Lawinen-Verschütteten-Suchgerät nach einem der Ansprüche 1 bis 8,
**dadurch gekennzeichnet, dass**
das Lawinen-Verschütteten-Suchgerät (10) einen Speicher (26) aufweist, in welchem eine Mehrzahl von Sprachnachrichten in einer Mehrzahl von Sprachen abgelegt ist.

10. Lawinen-Verschütteten-Suchgerät nach einem der Ansprüche 1 bis 9,
**dadurch gekennzeichnet, dass**
das Lawinen-Verschütteten-Suchgerät (10) einen Speicher (26) aufweist, in welchem eine Mehrzahl von vorbestimmten, insbesondere in einer Mehrzahl von Sprachen vorliegenden, Texten abgelegt ist, und eine Umwandlungseinrichtung (28), mittels welcher ein jeweiliger Text in die zumindest eine, insbesondere in einer Mehrzahl von Sprachen auszugebende, Sprachnachricht umsetzbar ist.

11. Lawinen-Verschütteten-Suchgerät nach einem der Ansprüche 1 bis 10,
**dadurch gekennzeichnet, dass**
das Lawinen-Verschütteten-Suchgerät (10) eine mittels der Steuerungseinrichtung (24) ansteuerbare Anzeigeeinheit (20) zum Anzeigen von Hinweisen für die Suche nach dem wenigstens einen weiteren Lawinen-Verschütteten-Suchgerät (32) aufweist.

12. Lawinen-Verschütteten-Suchgerät nach einem der Ansprüche 1 bis 11,
**dadurch gekennzeichnet, dass**
die Steuerungseinrichtung (24) dazu ausgebildet ist, die Anzeigeeinheit (20) in Abhängigkeit von der zumindest einen Sprachnachricht anzusteuern, insbesondere das Ausgeben der zumindest einen Sprachnachricht mittels des wenigstens einen Lautsprechers (22) in einer vorbestimmten zeitlichen Beziehung zu dem Anzeigen, insbesondere zeitgleich mit dem Anzeigen, zumindest eines Hinweises für die Suche nach dem wenigstens einen weiteren Lawinen-Verschütteten-Suchgerät (32) auf der Anzeigeeinheit (20) zu bewirken.

13. Verfahren zum Betreiben eines Lawinen-Verschütteten-Suchgeräts (10), welches eine Sendeeinheit (16) zum Senden wenigstens eines Sendesignals (18) aufweist, und eine Empfangseinheit (16) zum Empfangen wenigstens eines Sendesignals (30), welches von wenigstens einem weiteren Lawinen-Verschütteten-Suchgerät (32) ausgegeben wird, bei welchem eine Steuerungseinrichtung (24) des Lawinen-Verschütteten-Suchgeräts (10) wenigstens einen Lautsprecher (22) ansteuert,
wobei die Steuerungseinrichtung (24) den wenigstens einen Lautsprecher (22) derart ansteuert, dass der wenigstens eine Lautsprecher (22) zumindest eine Sprachnachricht ausgibt, wobei der wenigstens eine Lautsprecher (22) von der Steuerungseinrichtung (24) in Abhängigkeit von wenigstens einem Ereignis angesteuert wird, welches mit einer Suche nach dem wenigstens einen weiteren Lawinen-Verschütteten-Suchgerät (32) in Zusammenhang steht,
das Lawinen-Verschütteten-Suchgerät (10) den wenigstens einen Lautsprecher (22) aufweist und der wenigstens eine Lautsprecher (22) wenigstens ein Tonsignal ausgibt,
**dadurch gekennzeichnet, dass**
das wenigstens ein Tonsignal mit der Suche nach dem wenigstens einen weiteren Lawinen-Verschütteten-Suchgerät (32) in Zusammenhang steht, wobei die Steuerungseinrichtung (24) den wenigstens einen Lautsprecher (22) derart ansteuert, dass das wenigstens eine Tonsignal während des Ausgebens der zumindest einen Sprachnachricht unterdrückt wird oder mit einer verringerten Lautstärke ausgegeben wird.

## Claims

1. Avalanche transceiver, having a transmitting unit (16) for transmitting at least one transmit signal (18), a receiving unit (16) for receiving at least one transmit signal (30) from at least one further avalanche transceiver (32), and a control device (24) for controlling at least one loudspeaker (22),
wherein the control device (24) is designed to control the at least one loudspeaker (22) to output at least one voice message on the basis of at least one event, wherein the at least one event is associated with a search for the at least one further avalanche transceiver (32), wherein the avalanche transceiver (10) has the at least one loudspeaker (22) and the at least one loudspeaker (22) is designed to issue at least one audio signal,
**characterized in that**
the at least one audio signal is associated with the search for the at least one further transceiver (32), wherein the control device (24) is designed to control the at least one loudspeaker (22) such that the at least one audio signal during the output of the at least one voice message is suppressed or output with a reduced volume.

2. Avalanche transceiver according to claim 1,
**characterized in that**
the control device (24) is configured to then control the at least one loudspeaker (22) to output the at least one voice message, when the receiving unit (16) detects a change of a received strength and/or a received quality of the transmit signal (30) of the further avalanche transceiver (32) and/or detects a change of a direction, from which the transmit signal (30) of the further avalanche transceiver (32) originates.

3. Avalanche transceiver according to claim 1 or 2,
**characterized in that**
the control device (24) is designed to estimate a distance from the further avalanche transceiver (32) by evaluating the transmit signal (30) received by the receiving unit (16), and to subsequently control the at least one loudspeaker (22) then to output a voice message, when the distance is shorter or an increase of the distance is greater than a predefined threshold value.

4. Avalanche transceiver according to any one of claims 1 to 3,
**characterized in that**
the control device (24), by evaluating the transmit signal (30) received by the receiving unit (16), is designed to estimate a speed, with which a distance from the further avalanche transceiver (32) changes, particularly decreases, and to subsequently control the at least one loudspeaker (22) to output the at least one voice message, when the speed is greater than a predefined first threshold value, or lower than a predefined second threshold value.

5. Avalanche transceiver according to any one of claims 1 to 4,
**characterized in that**
the control device (24) is designed to take into account as the at least one event, whether the further avalanche transceiver (32) can be located using the transmit signal (30) received by the receiving unit (16).

6. Avalanche transceiver according to any one of claims 1 to 5,
**characterized in that**
the control device (24) is designed to take into account as the at least one event, whether the avalanche transceiver (10) is set in a search mode or a mode different from the search mode.

7. Avalanche transceiver according to any one of claims 1 to 6,
**characterized in that**
the control device (24) is designed to control the at least one loudspeaker (22) to output the at least one voice message if, over a predefined number of successive transmit signals (30) of the further avalanche transceiver (32), a search direction selected by a user of the avalanche transceiver (10) deviates by more than a predefined extent from a search direction to be selected, and/or a received strength of the transmit signal (30) of the further avalanche transceiver (32) decreases by more than a predefined extent.

8. Avalanche transceiver according to any one of claims 1 to 7,
**characterized in that**
the control device (24) is designed to take into account as the at least one event at least one operating entry of a user of the avalanche transceiver (10) and/or a handling of the avalanche transceiver (10) by the user.

9. Avalanche transceiver according to any one of claims 1 to 8,
**characterized in that**
the avalanche transceiver (10) has a memory (26), in which a multiplicity of voice messages in a multiplicity of languages is stored.

10. Avalanche transceiver according to any one of claims 1 to 9,
**characterized in that**
the avalanche transceiver (10) has a memory (26), in which a multiplicity of predetermined texts, particularly available in a multiplicity of languages, is stored, and a conversation device (28), by means of which a respective text can be converted into the at least one voice message to be output particularly in a multiplicity of languages.

11. Avalanche transceiver according to any one of claims 1 to 10,
**characterized in that**
the avalanche transceiver (10) has a display unit (20), which is controllable by means of the control device (24) for displaying indications for the search for the at least one further avalanche transceiver (32).

12. Avalanche transceiver according to any one of claims 1 to 11,
**characterized in that**
the control device (24) is designed to control the display unit (20) on the basis of the at least one voice message, particularly to effect the output of the at least one voice message by means of the at least one loudspeaker (22) in a predefined temporal relationship to the displaying, particularly simultaneously to the displaying of at least one indication for the search for the at least one further avalanche transceiver (32) on the display unit (20).

13. Method for operating an avalanche transceiver (10) which has a transmitting unit (16) for transmitting at least one transmit signal (18), and a receiving unit (16) for receiving at least one transmit signal (30) output from at least one further avalanche transceiver (32), in which a control device (24) of the avalanche transceiver (10) controls at least one loudspeaker (22),
wherein the control device (24) controls the at least one loudspeaker (22) such that the at least one loudspeaker (22) outputs at least one voice message, wherein the at least one loudspeaker (22) is controlled by the control device (24) on the basis of at least one event which is associated with a search for the at least one further avalanche transceiver (32), the avalanche transceiver (10) has the at least one loudspeaker (22) and the at least one loudspeaker (22) outputs at least one audio signal,
**characterized in that**
the at least one audio signal is associated with the search for the at least one further avalanche transceiver (32), wherein the control device (24) controls the at least one loudspeaker (22) such that the at least one audio signal during the output of the at least one voice message is suppressed or output with a reduced volume.

## Revendications

1. Appareil de recherche de victime d'avalanche, avec une unité d'émission (16), destinée à émettre au moins un signal d'émission (18), une unité de réception (16), destinée à recevoir au moins un signal d'émission (30) de la part d'au moins un autre appareil de recherche de victime d'avalanche (32) et avec un dispositif de commande (24), destiné à piloter au moins un haut-parleur (22), le dispositif de commande (24) étant conçu pour piloter, en fonction d'au moins un événement, le au moins un haut-parleur (22), destiné à produire au moins un message vocal, le au moins un événement étant en rapport avec une recherche du au moins un autre appareil de recherche de victime d'avalanche (32), l'appareil de recherche de victime d'avalanche (10) présentant le au moins un haut-parleur (22) et le au moins un haut-parleur (22) étant conçu pour produire au moins un signal sonore,
**caractérisé en ce que**
le au moins un signal sonore est en rapport avec la recherche du au moins un autre appareil de recherche de victime d'avalanche (32), le dispositif de commande (24) étant conçu pour piloter le au moins un haut-parleur (22), de sorte que le au moins un signal sonore est supprimé pendant la production du au moins un message vocal ou qu'il est produit avec un volume sonore réduit.

2. Appareil de recherche de victime d'avalanche selon la revendication 1,
**caractérisé en ce que**
le dispositif de commande (24) est conçu dans ce cas pour piloter le au moins un haut-parleur (22), destiné à produire le au moins un message vocal, lorsque l'unité de réception (16) saisit une modification d'une intensité reçue et / ou d'une qualité reçue du signal d'émission (30) de l'autre appareil de recherche de victime d'avalanche (32) et / ou une modification d'une direction, d'où provient le signal d'émission (30) de l'autre appareil de recherche de victime d'avalanche (32).

3. Appareil de recherche de victime d'avalanche selon la revendication 1 ou 2,
**caractérisé en ce que**
le dispositif de commande (24) est conçu pour estimer, par évaluation du signal d'émission (30), reçu par l'unité de réception (16), un éloignement de l'autre appareil de recherche de victime d'avalanche (32) et pour piloter le au moins un haut-parleur (22), destiné à produire dans ce cas le au moins un message vocal, lorsque l'éloignement est plus faible ou qu'une augmentation de l'éloignement est plus importante qu'une valeur seuil prédéterminée.

4. Appareil de recherche de victime d'avalanche selon l'une des revendications 1 à 3,
**caractérisé en ce que**
le dispositif de commande (24) est conçu pour estimer, par évaluation du signal d'émission (30), reçu par l'unité de réception (16), une vitesse avec laquelle se modifie, en particulier se réduit, un éloignement de l'autre appareil de recherche de victime d'avalanche (32) et pour piloter le au moins un haut-parleur (22), destiné dans ce cas à produire le au moins un message vocal, lorsque la vitesse est supérieure à une première valeur seuil prédéterminée ou inférieure à une seconde valeur seuil prédéterminée.

5. Appareil de recherche de victime d'avalanche selon l'une des revendications 1 à 4,
**caractérisé en ce que**
le dispositif de commande (24) est conçu pour considérer, en tant que le au moins un événement, si, à l'aide du signal d'émission (30), reçu par l'unité de réception (16), l'autre appareil de recherche de victime d'avalanche (32) doit être localisé.

6. Appareil de recherche de victime d'avalanche selon l'une des revendications 1 à 5,
**caractérisé en ce que**
le dispositif de commande (24) est conçu pour considérer, en tant que le au moins un événement, si l'appareil de recherche de victime d'avalanche (10) est placé en mode de recherche ou dans un mode, différent du mode de recherche.

7. Appareil de recherche de victime d'avalanche selon l'une des revendications 1 à 6,
**caractérisé en ce que**
le dispositif de commande (24) est conçu pour piloter dans ce cas le au moins un haut-parleur (22), destiné à produire le au moins un message vocal, si, au-delà d'un nombre prédéterminé de signaux d'émission successifs (30) de l'autre appareil de recherche de victime d'avalanche (32), une direction de recherche, adoptée par un utilisateur de l'appareil de recherche de victime d'avalanche (10), diverge d'une direction de recherche à adopter de plus d'une mesure prédéterminée et / ou si une intensité reçue du signal d'émission (30) de l'autre appareil de recherche de victime d'avalanche (32) diminue de plus d'une mesure prédéterminée.

8. Appareil de recherche de victime d'avalanche selon l'une des revendications 1 à 7,
**caractérisé en ce que**
le dispositif de commande (24) est conçu pour considérer, en tant que le au moins un événement, au moins une entrée de commande d'un utilisateur de l'appareil de recherche de victime d'avalanche (10) et / ou une manipulation de l'appareil de recherche de victime d'avalanche (10) par l'utilisateur.

9. Appareil de recherche de victime d'avalanche selon l'une des revendications 1 à 8,
**caractérisé en ce que**
l'appareil de recherche de victime d'avalanche (10) présente une mémoire (26), dans laquelle est déposée une multiplicité de messages vocaux dans une multiplicité de langues.

10. Appareil de recherche de victime d'avalanche selon l'une des revendications 1 à 9,
**caractérisé en ce que**
l'appareil de recherche de victime d'avalanche (10) présente une mémoire (26), dans laquelle est déposée une multiplicité de textes, prédéfinis, existant en particulier dans une multiplicité de langues et un dispositif de conversion (28), au moyen duquel un texte respectif peut être converti dans le au moins un message vocal, à produire en particulier dans une multiplicité de langues.

11. Appareil de recherche de victime d'avalanche selon l'une des revendications 1 à 10,
**caractérisé en ce que**
l'appareil de recherche de victime d'avalanche (10) présente une unité d'affichage (20), pouvant être pilotée au moyen du dispositif de commande (24), destinée à afficher des indications pour la recherche du au moins un autre appareil de recherche de victime d'avalanche (32).

12. Appareil de recherche de victime d'avalanche selon l'une des revendications 1 à 11,
**caractérisé en ce que**
le dispositif de commande (24) est conçu pour piloter l'unité d'affichage (20) en fonction du au moins un message vocal, en particulier pour occasionner la production du au moins un message vocal au moyen du au moins un haut-parleur (22) dans une relation temporelle prédéfinie par rapport à l'affichage, en particulier simultanément avec l'affichage d'au moins une indication pour la recherche du au moins un autre appareil de recherche de victime d'avalanche (32) sur l'unité d'affichage (20).

13. Procédé d'exploitation d'un appareil de recherche de victime d'avalanche (10), lequel présente une unité d'émission (16), destinée à émettre au moins un signal d'émission (18) et une unité de réception (16), destinée à recevoir au moins un signal d'émission (30), lequel est produit par au moins un autre appareil de recherche de victime d'avalanche (32), pour lequel un dispositif de commande (24) de l'appareil de recherche de victime d'avalanche (10) pilote au moins un haut-parleur (22), le dispositif de commande (24) pilotant le au moins un haut-parleur (22), de telle sorte que le au moins un haut-parleur (22) produit au moins un message vocal, le au moins un haut-parleur (22) étant piloté par le dispositif de commande (24) en fonction d'au moins un événement, lequel est en rapport avec une recherche du au moins un autre appareil de recherche de victime d'avalanche (32), l'appareil de recherche de victime d'avalanche (10) présentant le au moins un haut-parleur (22) et le au moins un haut-parleur (22) produisant au moins un signal sonore,
**caractérisé en ce que**
le au moins un signal sonore est en rapport avec la recherche du au moins un autre appareil de recherche de victime d'avalanche (32), le dispositif de commande (24) pilotant le au moins un haut-parleur (22), de telle sorte que le au moins un signal sonore est supprimé pendant la production du au moins un message vocal ou qu'il est produit avec un volume sonore réduit.
